# EUROPEAN PATENT SPECIFICATION

(11) **EP 2 977 666 B1**
(45) Date of publication and mention of the grant of the patent: **03.01.2018**
(21) Application number: 15020087.1
(22) Date of filing: 08.06.2015
(51) Int. Cl.: F16L 37/098

(54) **QUICK COUPLING DEVICE FOR LIQUID TUBES**
SCHNELLKUPPLUNGSVORRICHTUNG FÜR FLÜSSIGKEITSROHRE
DISPOSITIF DE RACCORD RAPIDE POUR TUBES À LIQUIDE

(30) Priority: 22.07.2014 IT MI20141333
(43) Date of publication of application: 27.01.2016
(73) Proprietor: Oberdin S.R.L., 20121 Milano (IT)
(72) Inventor: Bakine Torok, Ildiko, 20121 Milano (IT)
(74) Representative: Rastelli, Franco

(56) References cited:
- EP-A1- 0 579 141
- FR-A1- 2 385 971
- GB-A- 2 332 721
- JP-B2- 3 031 950
- US-A1- 2005 082 828

## Description

### BACKGROUND OF THE INVENTION

The present invention relates to a quick coupling device for tubes, particularly for tubes conveying liquids.

As is known, for coupling tubes in general, several coupling systems are at present used, the most common of which are:
- male-female threads;
- a shaped or contoured male element and a female element having resilient latching members conveying respective fluids; and
- a shaped or contoured male element and a female element having a clamping bridging member.

A common feature of the above mentioned prior coupling systems is that they nearly always use a male element of a comparatively small size together with a female excessively large and complex structure.

EP 0 579 141 A1 discloses a device as defined in the precharacterizing portion of the appended claim 1.

### SUMMARY OF THE INVENTION

Accordingly, the aim of the present invention is to provide a quick coupling device for coupling liquid tubes which allows to quickly connect and disconnect the tubes and which has a very small size and includes a reduced number of component elements and preferably made of thermoplastic materials.

Within the scope of the above mentioned aim, a main object of the invention is to provide such a quick coupling device which, besides including a very small number of components, is very compact and has very good mechanical properties.

Yet another object of the present invention is to provide such a quick coupling device which, owing to its specifically designed constructional features, is very reliable and safe in operation.

In accordance with the invention, there is provided a quick coupling device as defined in the appended claims.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

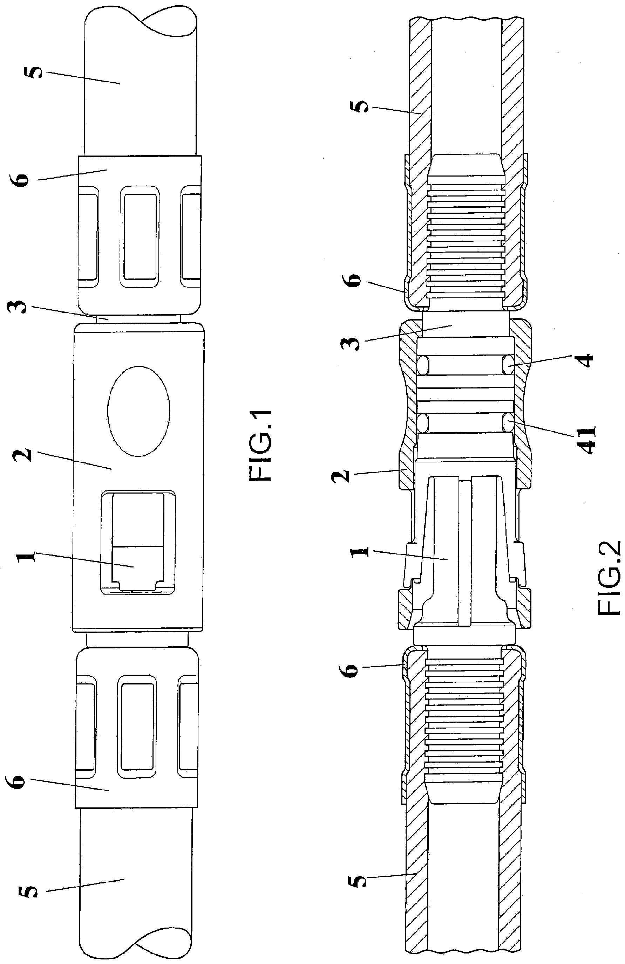

Figure 1 shows the coupling device in its use condition, that is in its coupling position;
Figure 2 is a cross-sectional view of the inventive device in its coupled position;

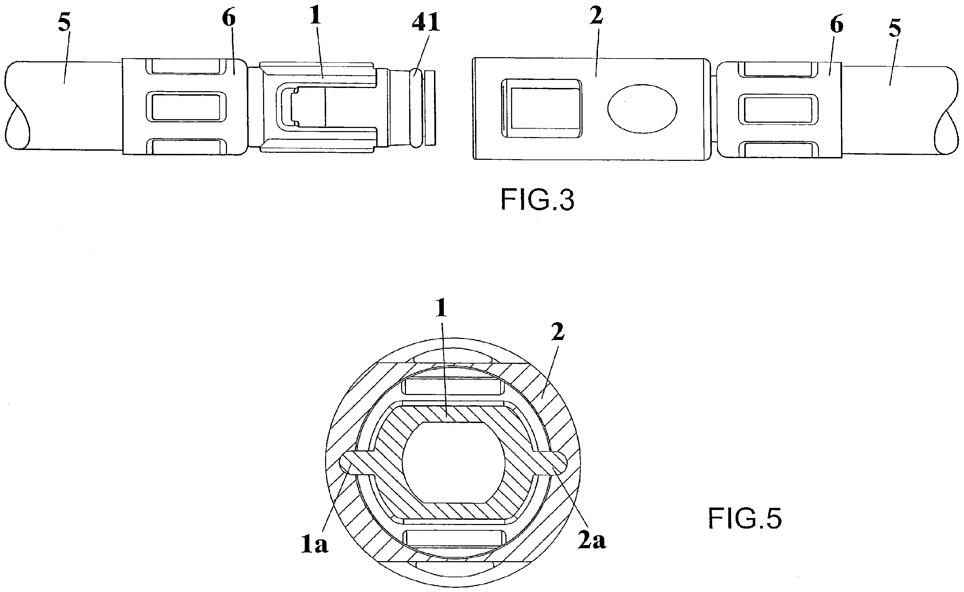

Figure 3 shows the inventive device in a disconnected position thereof;

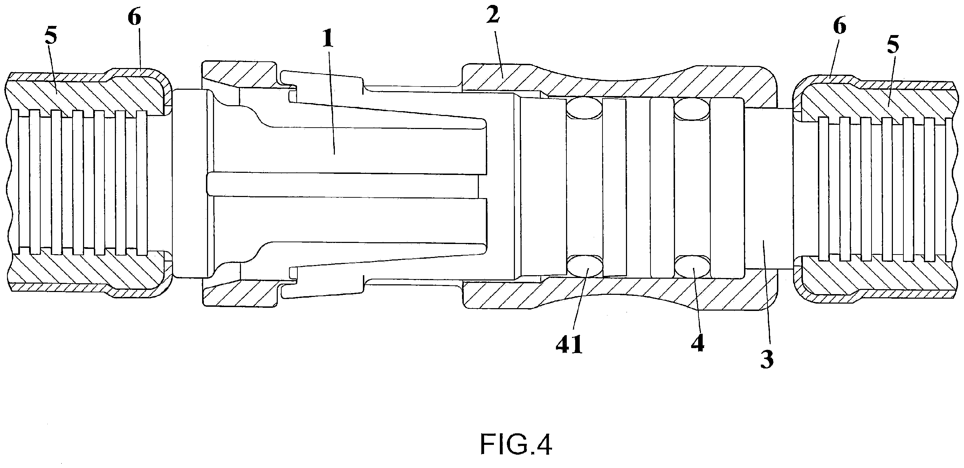

Figure 4 is a cross-sectional view, on an enlarged scale compared with Figure 2, showing the inventive device in its coupled position;
Figure 5 is a partial view of the inventive device, showing a resilient tongue of the male element and the shaped pattern of the female element, in the disconnected position thereof; and

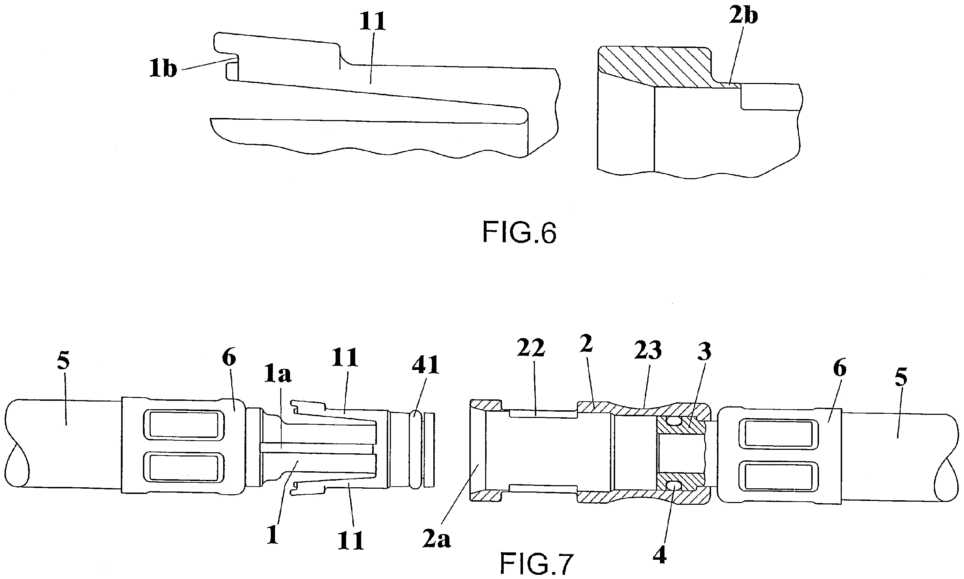

Figures 6 and 7 show a cross-sectional and a side view of the coupling device, respectively, being illustrated in its disconnected or disengaged position.

### DESCRIPTION OF THE PREFERRED EMBODIMENTS

With reference to the number references of the above mentioned figures, the quick coupling device, according to the present invention, comprises a male element 1 and a female element 2, which latter has a female element end-piece 3.

Said female element end-piece 3 may be rotatively driven with respect to the female element 2 itself and between the two components a gasket or sealing element 4 is arranged.

Alternatively, the female element 2 and end-piece 3 are made as a single piece, thereby omitting the mentioned gasket.

As shown, the male element 1 comprises at least an elastic or resilient tongue 11.

Preferably, said resilient tongue 11 comprises a shaped or contoured pattern 1b at the tip portion thereof and an anti-rotary edge or rim portion 1a is provided.

Said female element 2 comprises at least a female element opening 22.

Preferably, the male element 1 comprises two resilient tongues 11, arranged at mutually radially opposite positions, and said female element 2 comprises two corresponding openings 22.

Preferably, each said opening 22 comprises a shaped portion 2b and anti-rotating slots 2a.

Both said male element 1 and female element 2 end-piece 3 comprise a cylindric portion, of the rubber supporting type, for providing a crimped coupling 6, for fixing respective flexible tubes or hoses 5.

The coupling is herein carried out by engaging the male element 1 in the female element 2, this engagement being facilitated by the mutual engagement of the slot 2a and edge 1a.

Thus, by inserting the male element 1 into the female element 2, the elastic or resilient tongues 11 of said male element will be closed up to arrive at the openings 22 of the female element 2, where they will return to their original configuration and, by latching in said openings, being made non-disconnectable. Between the female element 2 and the male element 1 a gasket 41 for providing a sealed or tight coupling is arranged.

Thus, as the device is pressurized by the liquid conveyed through the tubes 5, the male element 1 will recover such a position that the coupling of the shaped portions 1b and 2b will prevent further displacements of the tongue elements 11.

Thus, the only way for disconnecting the two tubes is that of displacing the male element 1 toward the female element 2 to cause the tongues 11 to be disengaged to a free condition.

In this position, by simultaneously pressing the tongue elements, it is possible to easily disconnect the two end portions.

It has been found that the invention fully achieves the intended aim and objects.

In fact, the invention has provided a tube quick coupling device, in particular for tubes conveying liquids, which is construction-wise very simple while being very efficient and reliable.

The quick coupling device according to the present invention allows to quickly connect and disconnect tubes while having a very small size, since the female element has a radial extension which is substantially similar to that of the male element.

Another important advantage of the inventive device is that it comprises a very small number of component parts all made of a thermoplastic material.

In practicing the invention, the materials used as well as the contingent size and shapes can be any, depending on requirements.

## Claims

1. A tube quick coupling device, for coupling liquid tubes (5), comprising a male element (1) and a female element (2), each of said male (1) and female (2) elements being adapted to be coupled to a respective liquid tube (5); said male element (1) including at least a resilient tongue (11) engageable in an opening (22) radially formed in said female element(2), said male element (1) comprising an anti-rotating edge (1a) and said female element (2) comprising an anti-rotating slot (2a) wherein a mutual engagement of said slot (2a) and said edge (1a) facilitating the engagement of said male element (1) in said female element (2), **characterized in that** said resilient tongue comprises a shaped portion (1b) at a tip thereof and said opening (22) comprises a shaped portion (2b) which couples with said shaped portion (1b) to prevent further displacement of said resilient tongue (11) and hence disconnection of the male element (1) and the female element (2) as the device is pressurized by liquid conveyed through said liquid tubes (5).

2. A quick coupling device, according to claim 1, **characterized in that** said female element (2) comprises an end piece (3) rotatively arranged with respect to said female element (2), a sealing gasket (4) being arranged between said end piece (3) and female element (2).

3. A quick coupling device, according to one or more of the preceding claims, **characterized in that** said male element (1) comprises two resilient tongues (11) and said female element (2) comprises two openings.

4. A quick coupling device, according to one or more of the preceding claims, **characterized in that** an end piece (3) of both said male element (1) and female element (2) comprise a cylindric portion (6) for providing a crimped coupling for fixing respective liquid tubes (5).

5. A quick coupling device, according to one or more of the preceding claims, **characterized in that** said device comprises a sealing gasket (41) arranged between said male element (1) and said female element (2).

## Patentansprüche

1. Rohrschnellkupplungsvorrichtung zum Kuppeln von Flüssigkeitsrohren (5), die ein Steckelement (1) und ein Aufnahmeelement (2) umfasst, wobei jedes des Steckelements (1) und des Aufnahmeelements (2) eingerichtet ist, um mit einem jeweiligen Flüssigkeitsrohr (5) gekuppelt zu werden;
wobei das Steckelement (1) mindestens eine Federzunge (11) beinhaltet, die in eine Öffnung (22) eingreifen kann, die radial in dem Aufnahmeelement (2) gebildet ist, wobei das Steckelement (1) einen Verdrehsicherungsrand (1a) umfasst und das Aufnahmeelement (2) einen Verdrehsicherungsschlitz (2a) umfasst, wobei ein gegenseitiger Eingriff des Schlitzes (2a) und des Rands (1a) den Eingriff des Steckelements (1) in das Aufnahmeelement (2) ermöglicht, **dadurch gekennzeichnet, dass** die Federzunge einen geformten Abschnitt (1b) an einer Spitze davon umfasst und die Öffnung (22) einen geformten Abschnitt (2b) umfasst, welcher an den geformten Abschnitt (1b) gekuppelt ist, um eine weitere Verschiebung der Federzunge (11) und somit eine Trennung des Steckelements (1) und des Aufnahmeelements (2) zu verhindern, wenn die Vorrichtung durch Flüssigkeit, die durch die Flüssigkeitsrohre (5) befördert wird, unter Druck gesetzt wird.

2. Schnellkupplungsvorrichtung nach Anspruch 1, **dadurch gekennzeichnet, dass** das Aufnahmeelement (2) ein Endteil (3) umfasst, das drehbar bezüglich des Aufnahmeelements (2) angeordnet ist, wobei eine Dichtung (4) zwischen dem Endteil (3) und dem Aufnahmeelement (2) angeordnet ist.

3. Schnellkupplungsvorrichtung nach einem oder mehreren der vorherigen Ansprüche, **dadurch gekennzeichnet, dass** das Steckelement (1) zwei Federzungen (11) umfasst und das Aufnahmeelement (2) zwei Öffnungen umfasst.

4. Schnellkupplungsvorrichtung nach einem oder mehreren der vorherigen Ansprüche, **dadurch gekennzeichnet, dass** ein Endteil (3) sowohl des Steckelements (1) als auch des Aufnahmeelements (2) einen zylinderförmigen Abschnitt (6) zum Bereitstellen einer Quetschkupplung zum Fixieren jeweiliger Flüssigkeitsrohre (5) umfasst.

5. Schnellkupplungsvorrichtung nach einem oder mehreren der vorherigen Ansprüche, **dadurch gekennzeichnet, dass** die Vorrichtung eine Dichtung (41) umfasst, die zwischen dem Steckelement (1) und dem Aufnahmeelement (2) angeordnet ist.

## Revendications

1. Dispositif de raccord rapide pour tubes, destiné à raccorder des tubes à liquide (5), comprenant un élément mâle (1) et un élément femelle (2), chacun desdits éléments mâle (1) et femelle (2) étant adapté pour être raccordé à un tube à liquide (5) respectif ;
ledit élément mâle (1) comprenant au moins une langue élastique (11) apte à être engagée dans une ouverture (22) formée radialement dans ledit élément femelle (2), ledit élément mâle (1) comprenant un bord anti-rotation (1a) et ledit élément femelle (2) comprenant une fente anti-rotation (2a), un engagement mutuel de ladite fente (2a) et dudit bord (1a) facilitant l'engagement dudit élément mâle (1) dans ledit élément femelle (2), **caractérisé en ce que** ladite langue élastique comprend une partie façonnée (1b) à une pointe de celle-ci, et ladite ouverture (22) comprend une partie façonnée (2b) apte à être raccordée à ladite partie façonnée (1b) pour empêcher un déplacement supplémentaire de ladite langue élastique (11) et ainsi la déconnexion de l'élément mâle (1) et de l'élément femelle (2) lorsque le dispositif est sous pression du fait d'un liquide transporté à travers lesdits tubes à liquide (5).

2. Dispositif de raccord rapide selon la revendication 1, **caractérisé en ce que** ledit élément femelle (2) comprend une pièce d'extrémité (3) disposée de façon rotative par rapport audit élément femelle (2), un joint d'étanchéité (4) étant disposé entre ladite pièce d'extrémité (3) et l'élément femelle (2).

3. Dispositif de raccord rapide selon l'une ou plusieurs des revendications précédentes, **caractérisé en ce que**
ledit élément mâle (1) comprend deux langues élastiques (11) et ledit élément femelle (2) comprend deux ouvertures.

4. Dispositif de raccord rapide selon l'une ou plusieurs des revendications précédentes, **caractérisé en ce qu'**une pièce d'extrémité (3) à la fois de l'élément mâle (1) et de l'élément femelle (2) comprend une partie cylindrique (6) destinée à fournir un raccord serti pour la fixation des tubes à liquide (5) respectifs.

5. Dispositif de raccord rapide selon l'une ou plusieurs des revendications précédentes, **caractérisé en ce que** ledit dispositif comprend un joint d'étanchéité (41) disposé entre ledit élément mâle (1) et ledit élément femelle (2).
